# EUROPÄISCHE PATENTSCHRIFT

(11) **EP 2 688 738 B1**
(45) Veröffentlichungstag und Bekanntmachung des Hinweises auf die Patenterteilung: **16.09.2015**
(21) Anmeldenummer: 12702014.7
(22) Anmeldetag: 30.01.2012
(51) Int. Cl.: B29D 30/00, B29D 30/16, B29D 30/20, B29D 30/24, B29D 30/30

(54) **VERFAHREN ZUR HERSTELLUNG EINES FAHRZEUGREIFENS**
PROCESS FOR FORMING A VEHICLE TIRE
PROCEDE POUR LA FABRICATION D'UN PNEU DE VÉHICULE

(30) Priorität: 25.03.2011 DE 102011001559
(43) Veröffentlichungstag der Anmeldung: 29.01.2014
(73) Patentinhaber: Continental Reifen Deutschland GmbH, 30165 Hannover (DE)
(72) Erfinder: GERIGHAUSEN, Martin, 30890 Barsinghausen (DE)
(74) Vertreter: Widjaja, Wira
(86) Internationale Anmeldenummer: PCT/EP2012/051402
(87) Internationale Veröffentlichungsnummer: WO 2012/130496

(56) Entgegenhaltungen:
- WO-A1-2007/055695
- WO-A1-2008/048089
- DE-A1-102005 055 609
- US-A- 5 385 626

## Beschreibung

Die Erfindung betrifft ein Verfahren zur Herstellung eines Fahrzeugreifens.

Bei der Herstellung von Fahrzeugreifen ist bekannt die Reifenkarkasse auf einer separaten Reifenaufbautrommel herzustellen. Vor der Reifenaufbautrommel ist mindestens eine Zuführeinrichtung positioniert, mit der einzelne Reifenaufbauteile der Reifenaufbautrommel zugeführt werden. Beim Aufbau der Reifenkarkasse ist die entsprechende Reifenaufbautrommel fest positioniert. Die unterschiedlichen Zuführeinrichtungen sind dabei unterschiedlich in Richtung der Reifenaufbautrommel geneigt, um die entsprechenden Reifenaufbauteile auf die Reifenaufbautrommel aufzuwickeln.

Ein wesentlicher Nachteil dieser Art der Herstellung liegt in der hohen Funktionsdichte auf einem relativ kleinen Bauraum. Die Zuführeinrichtungen müssen unterschiedlich zur Reifenaufbautrommel geneigt sein, wobei bei einer Änderung des Trommeldurchmessers alle Zuführeinrichtungen wieder neu justiert werden müssen. Ein weiterer Nachteil besteht in der geringen Flexibilität bei der Herstellung von Reifenkarkassen. Bei einer Änderung der Reifenkonstruktion müssen ebenfalls alle Zuführeinrichtungen neu justiert werden. Die WO 2008/048089 A1, DE 10 2005 055609 A1, WO 2007/055695 A1 und US 5 385 626 A offenbaren bekannte Herstellungsverfahren für Fahrzeugreifen.

Der Erfindung liegt die Aufgabe zugrunde, ein Verfahren bereitzustellen, mit dem ein Fahrzeugreifen auf einfache Weise hergestellt werden kann.
Außerdem soll das Verfahren eine hohe Flexibilität aufweisen.

Gelöst wird die Aufgabe gemäß Anspruch 1 dadurch, dass ein Verfahren mit folgenden Schritten eingesetzt wird:
a) Positionierung einer Karkasstrommel vor eine erste Zuführeinrichtung zum Auflegen von einem ersten Reifenaufbauteil,
b) Aufwickeln des ersten Reifenaufbauteiles in einer ersten Auflegeposition auf der rotierenden Karkasstrommel,
c) Verfahren der Karkasstrommel in vertikaler Richtung in mindestens eine weitere Auflegepositionen mit einer jeweils zugeordneten Zuführeinrichtung zum Auflegen von Reifenaufbauteilen,
   wobei die Zuführeinrichtungen jeweils in vertikaler Richtung übereinander angeordnet sind, die Karkasstrommel mit einem verfahrbaren Trommellift in vertikaler Richtung verfahren wird und an jeder Auflegeposition nacheinander einzelne Reifenaufbauteile übereinander aufgewickelt werden,
d) Fertigestellen der Reifenkarkasse auf der Karkasstrommel und Abnahme der fertigen Reifenkarkasse von der Karkasstrommel
e) Vervollständigung des Reifenrohlings mit einem konventionellen Herstellungsverfahren.

Ein Vorteil der Erfindung ist insbesondere darin zu sehen, dass durch das Verfahren auf einfache Weise ein Fahrzeugreifen hergestellt werden kann.
Insbesondere wird die Komplexität der einzelnen Verfahrensschritte sowie der Reifenaufbautrommel insgesamt wesentlich reduziert.
Ein weiterer wesentlicher Vorteil besteht in der hohen Flexibilität bei der Herstellung einer Reifenkarkasse.
Bei einer Änderung des Trommeldurchmessers der Karkasstrommel müssen die erfindungsgemäßen Zuführeinrichtungen nicht wieder neu justiert werden. Ein Änderung des Trommeldurchmessers ist z.B. beim Wechsel der herzustellenden Reifengröße notwendig. Ein weiterer Vorteil besteht darin, dass mit dem Verfahren eine hohe Flexibilität bei der Reifenkonstruktion möglich ist. Es lassen sich auf einfache Art und Weise Reifenaufbauteile für die Reifenkonstruktion ergänzen. Dies ist dadurch möglich, in dem eine weitere Zuführeinrichtung über die bereits bestehende Zuführeinrichtungen angeordnet wird. Bei dieser Ergänzung müssen die anderen Zuführeinrichtungen nicht wieder neu justiert werden, wie das bei herkömmlichen Verfahren der Fall ist.

In einer vorteilhaften Weiterbildung der Erfindung ist vorgesehen, dass die einzelnen Zuführvorrichtungen im Wesentlichen horizontal und parallel übereinander angeordnet sind, wobei das Aufwickeln auf die Karkasstrommel im Wesentlichen tangential zur Karkasstrommel erfolgt.
Durch diese Art der Anordnung kann das Verfahren auf einfache Weise modulartig ergänzt werden. Eine Neujustierung der anderen Zuführeinrichtungen ist dabei nicht erforderlich.

In einer weiteren vorteilhaften Weiterbildung der Erfindung ist vorgesehen, dass die einzelnen Zuführvorrichtungen in Form von Modulen mit einheitlichen Hauptmassen ausgebildet sind, wobei die Module übereinander angeordnet sind und modular ergänzt oder ausgetauscht werden können.
Durch die einheitlichen Hauptmaße der einzelnen Module sind die entsprechenden Anschlussmaße ebenfalls normiert. Dadurch lassen sich die einzelnen Module einfach übereinander anordnen.

In einer weiteren vorteilhaften Weiterbildung der Erfindung ist vorgesehen, dass die einzelnen Module eine im wesentlichen konstante Höhen- und konstante Längen-Abmessung aufweisen.
Auf diese Weise wird der Austausch von einzelnen Modulen vereinfacht.

In einer weiteren vorteilhaften Weiterbildung der Erfindung ist vorgesehen, dass die Übergabe des Reifenaufbauteiles an die Karkasstrommel an der Unterseite der Karkasstrommel erfolgt.
Dadurch wird eine höhere Übergabepräzision zwischen der Zuführeinrichtung und der Karkasstrommel erreicht.

In einer weiteren vorteilhaften Weiterbildung der Erfindung ist vorgesehen, dass ein Teil der Zuführeinrichtung bei der Übergabe des Reifenaufbauteiles an die Karkasstrommel in tangentialer Richtung an die Karkasstrommel verfahren wird und nach der Übergabe des Reifenaufbauteiles wieder in ihre Ausgangsposition zurückkehrt.
Auf diese Weise wird eine präzise Übergabe des entsprechenden Reifenaufbauteils an die Karkasstrommel erreicht.

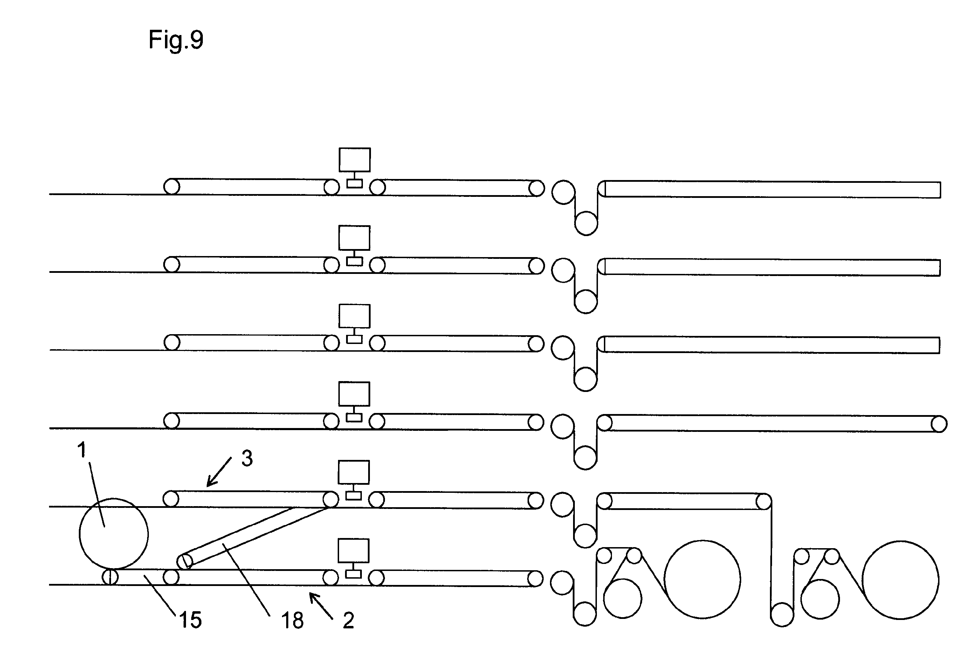

In einer weiteren vorteilhaften Weiterbildung der Erfindung ist vorgesehen, dass über eine Neigungsverstellung einer Zuführvorrichtung zwei Reifenaufbauteile gleichzeitig auf der Karkasstrommel aufgewickelt werden.
Ein entsprechendes Ausführungsbeispiel zeigt die Fig. 9. Das gleichzeitige Auflegen von zwei Reifenaufbauteilen verkürzt die Zykluszeit erheblich.

In einer weiteren vorteilhaften Weiterbildung der Erfindung ist vorgesehen, dass eine Innenschicht und eine erste Karkasseinlage als Reifenaufbauteile gleichzeitig auf der Karkasstrommel aufgewickelt werden.

In einer weiteren vorteilhaften Weiterbildung der Erfindung ist vorgesehen, dass hinter den Zuführeinrichtungen einzelne Flachriemenförderer angeordnet sind, wobei die Flachriemenförderer übereinander und im Wesentlichen horizontal angeordnet sind. Diese Anordnung entspricht der horizontalen Anordnung der einzelnen Zuführeinrichtungen. Eine korrrekte Förderung der einzelnen Reifenaufbauteile lässt sich dadurch auf einfache Weise kontrollieren.

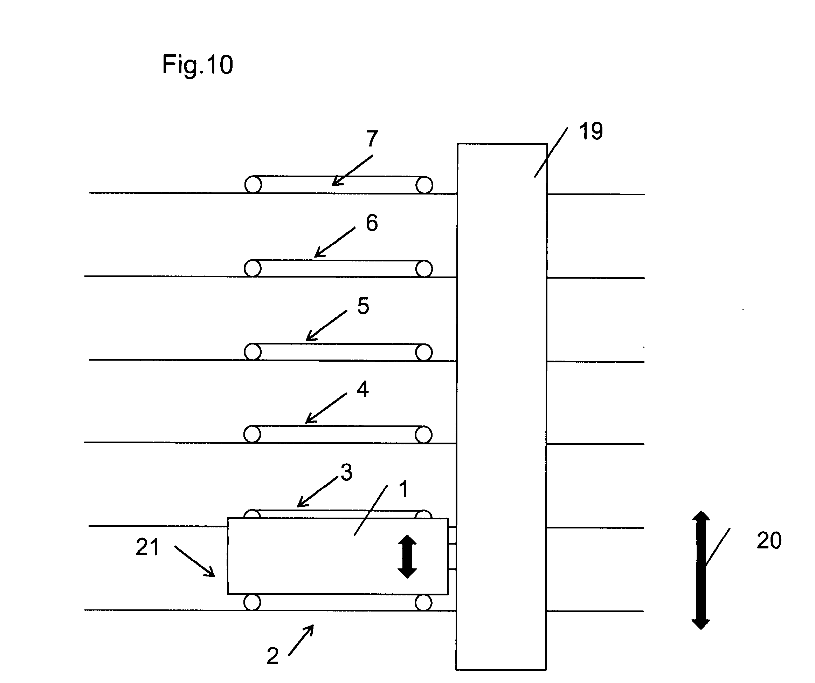

In einer weiteren vorteilhaften Weiterbildung der Erfindung ist vorgesehen, dass der Trommellift die Karkasstrommel auf einer Seite der Karkasstrommel hält und die Karkasstrommel mit dem Trommellift in vertikaler Richtung vor die einzelnen Zuführeinrichtungen verfahren wird, wobei die Karkasstrommel ausschließlich einseitig gelagert wird.
Bei dieser Ausführungsform wird die Reifenkarkasse in Form eines flachen Schlauches von der Karkasstrommel abgenommen. Ein entsprechendes Ausführungsbeispiel ist in der Fig. 10 gezeigt.

In einer weiteren vorteilhaften Weiterbildung der Erfindung ist vorgesehen, dass die Karkasstrommel auf der einer Seite von dem Trommellift und auf der anderen Seite von einem Reitstocklift gehalten wird.
Auf diese Weise wird die Durchbiegung der Karkasstrommel aufgrund ihres Eigengewichtes minimiert. Eine geringe Durchbiegung der Karkasstrommel gewährleistet eine hohe Herstellungsqualität für die herzustellenden Reifen.

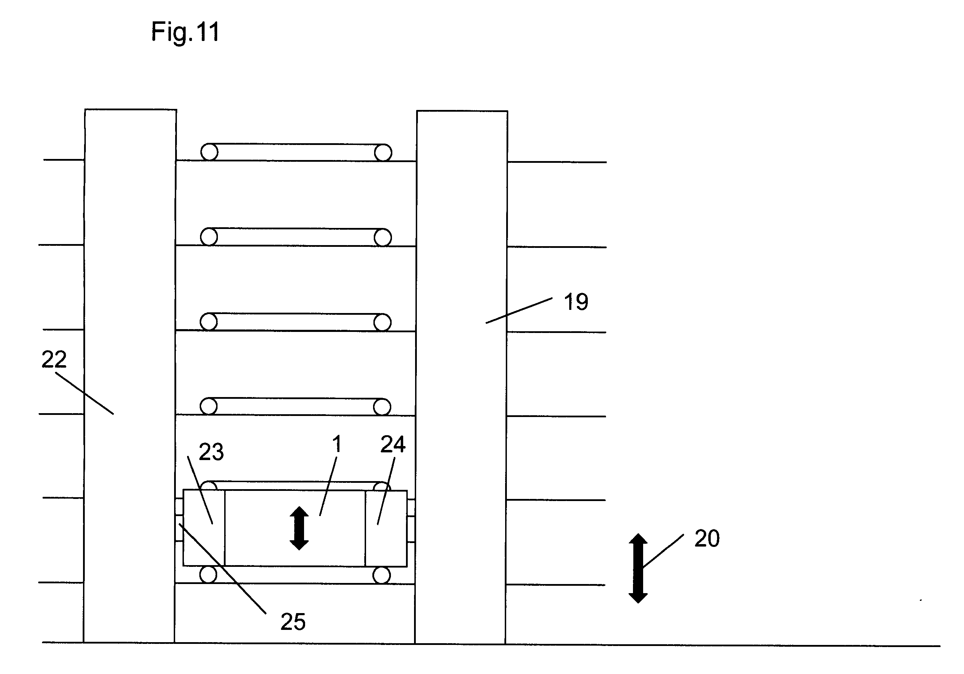

In einer weiteren vorteilhaften Weiterbildung der Erfindung ist vorgesehen, dass die Karkasstrommel zwei Lagenumschlagsmechanismen zum Umschlagen der Karkasseinlagen in den Reifenwülsten umfasst.
Dadurch sind ebenfalls Reifenkarkassen herstellbar, bei denen der Lagenumschlag bereits auf der Karkasstrommel erfolgt. Ein entsprechendes Ausführungsbeispiel ist in der Fig. 11 gezeigt.

In einer weiteren vorteilhaften Weiterbildung der Erfindung ist vorgesehen, dass die Karkasstrommel auf einer Seite zum Abholen der fertig gestellen Reifenkarkasse freigeben wird, wobei die Aufnahme des Reitstockliftes oder des Trommeliftes in eine Warteposition verfahren wird.
Dadurch kann die fertiggestellte Reifenkarkasse einfach von der Karkasstrommel abgenommen werden.

In einer weiteren vorteilhaften Weiterbildung der Erfindung ist vorgesehen, dass die Zuführvorrichtungen mit separaten Trennvorrichtungen zum Durchtrennen der Reifenaufbauteile versehen sind.
Dadurch lassen sich kurze Zykluszeiten erreichen, weil die Bauteile vorabgelängt werden.

In einer weiteren vorteilhaften Weiterbildung der Erfindung ist vorgesehen, dass die Zuführvorrichtungen mit separaten Bahnsteuerungen versehen sind.
Dadurch läßt sich eine hohe Präzision beim Auffwickeln der Bauteile erreichen.

Anhand mehrerer Ausführungsbeispiele soll die Erfindung näher erläutert werden. Es zeigen:

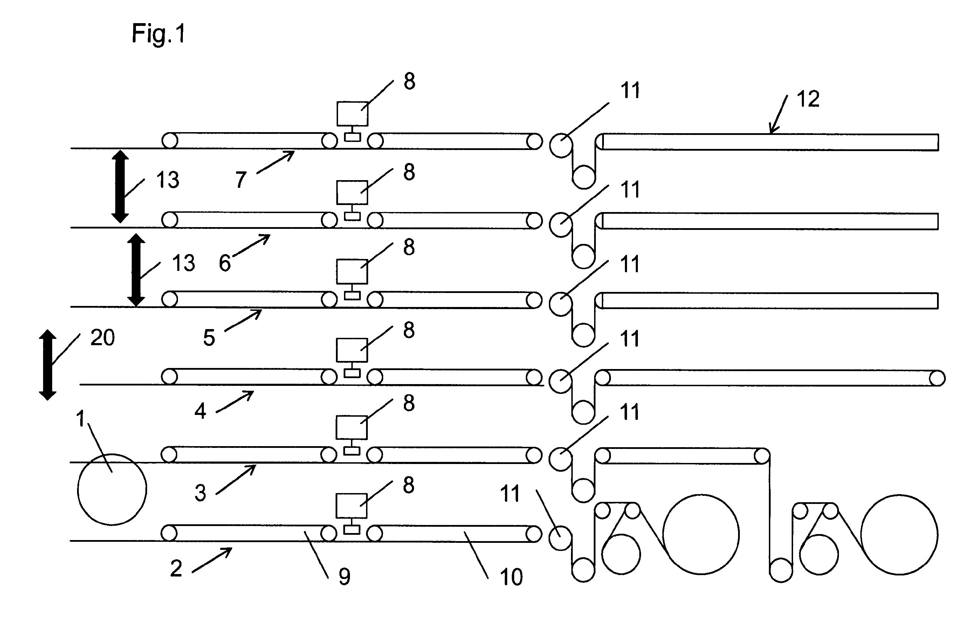

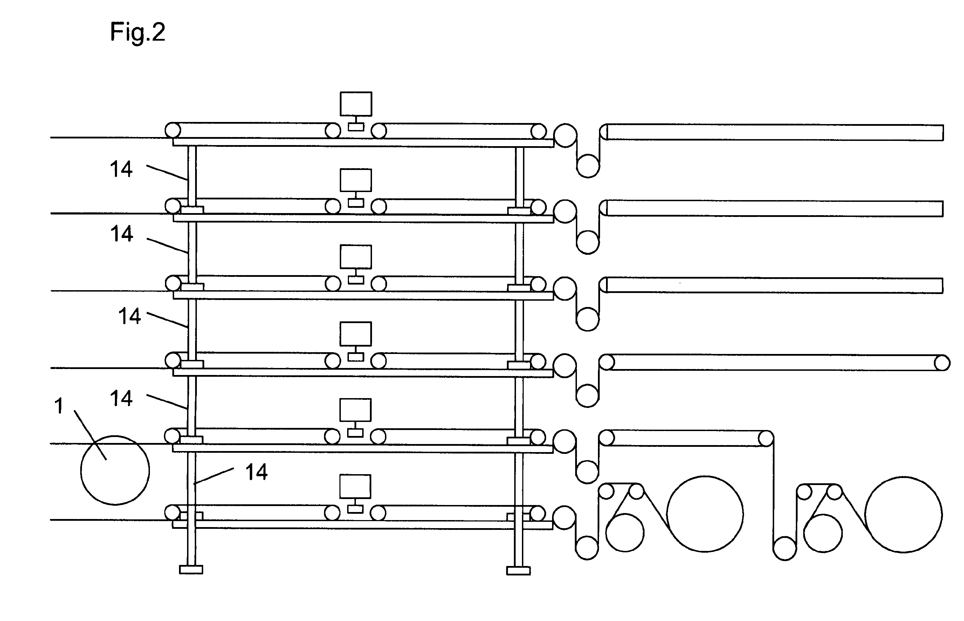

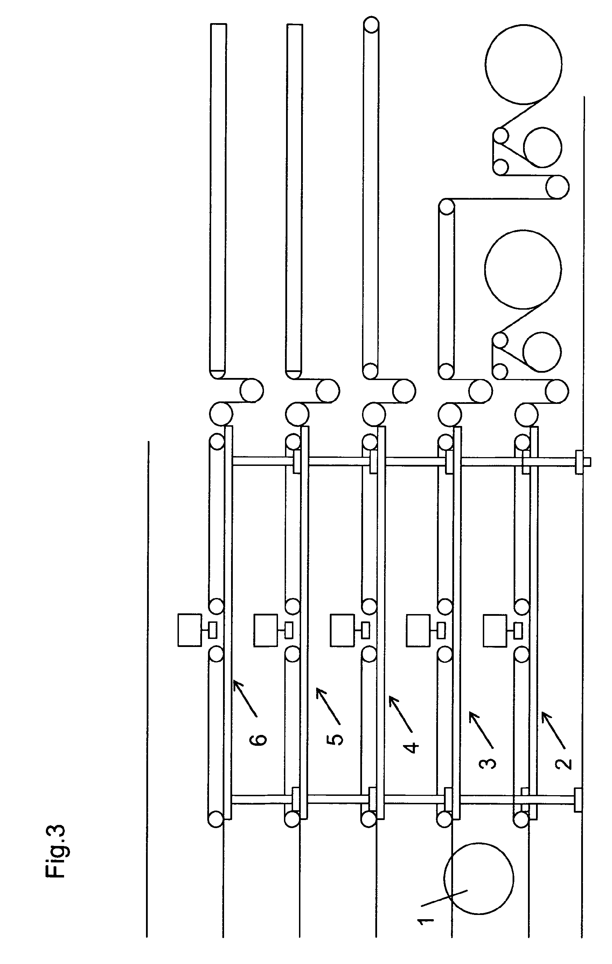

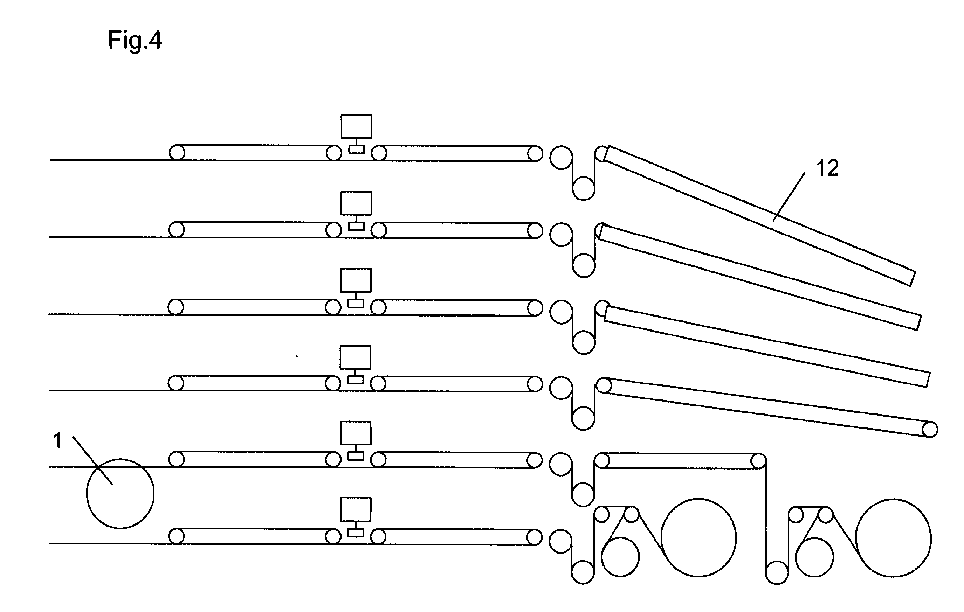

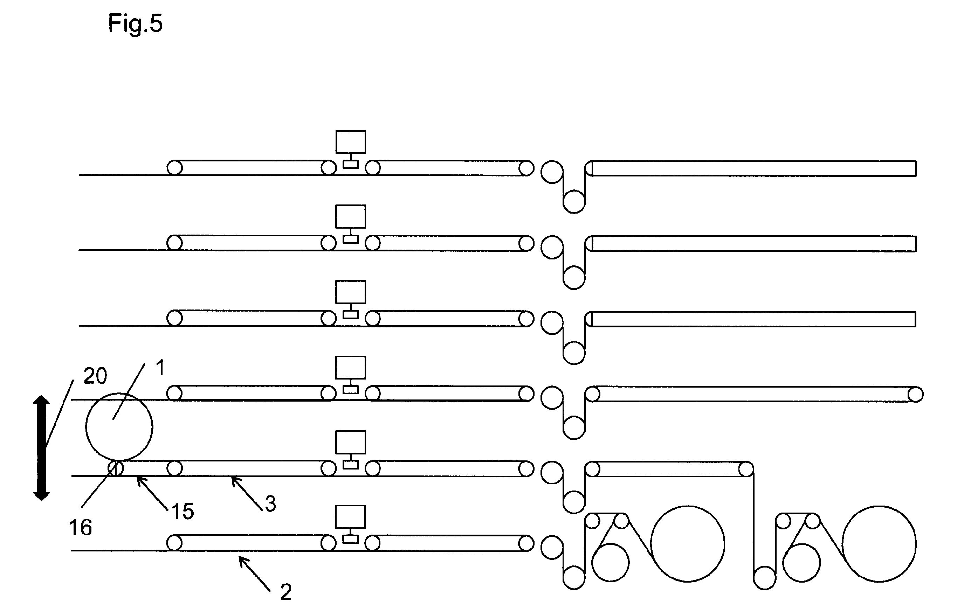

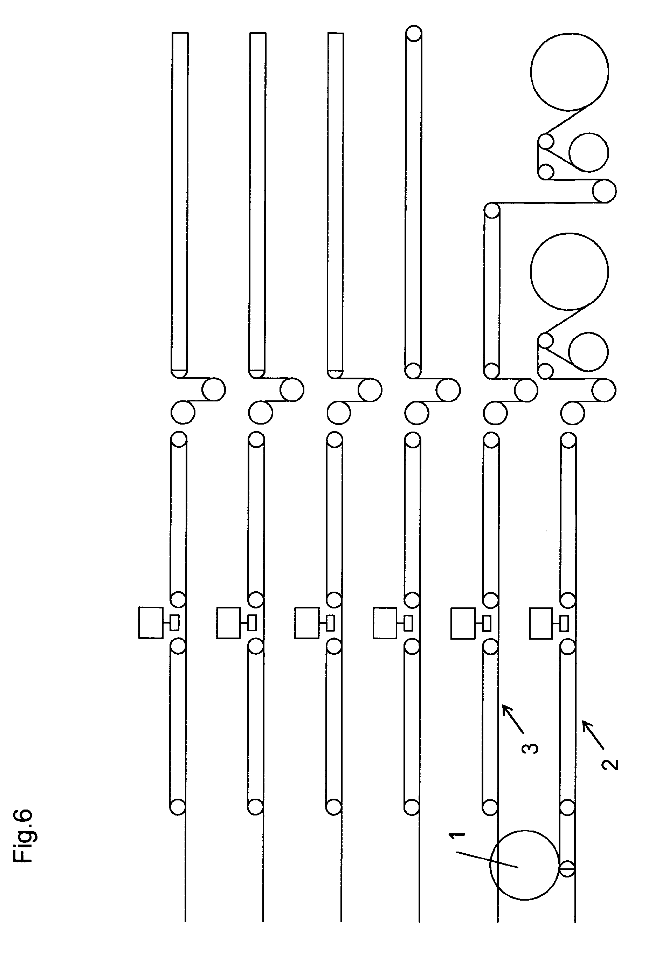

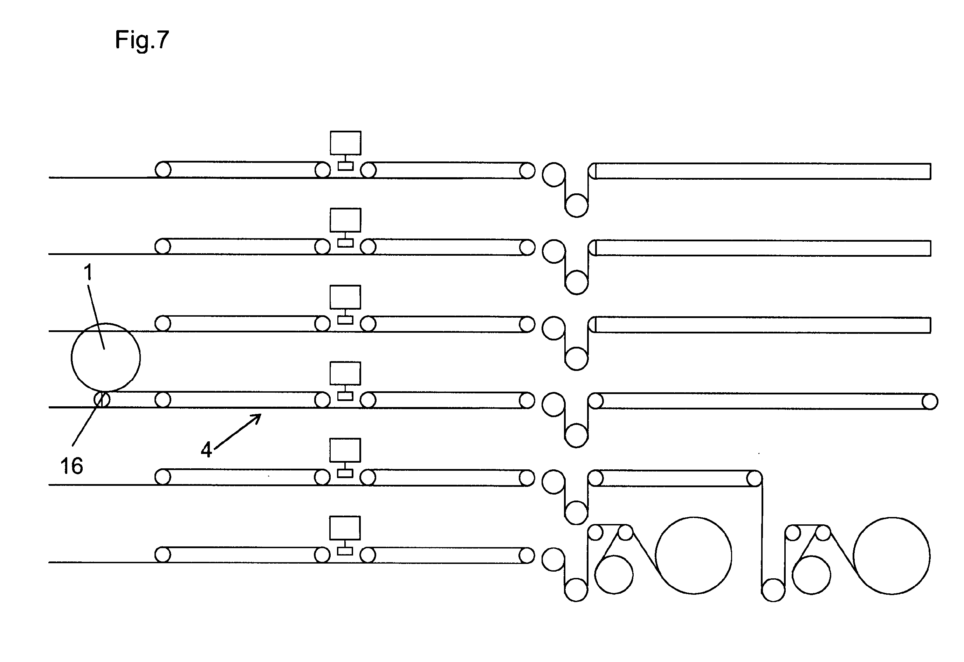

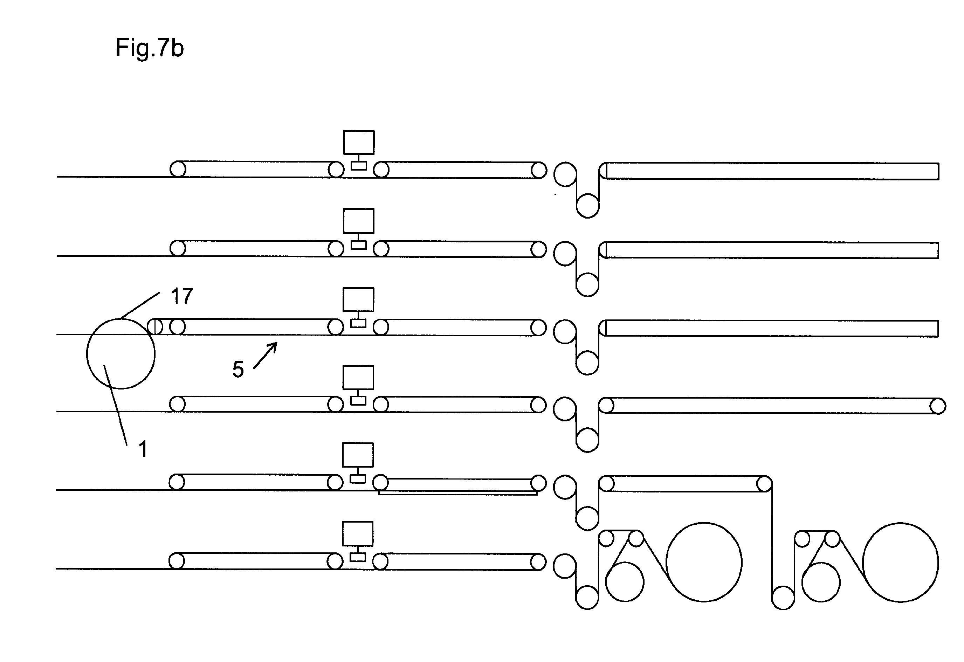

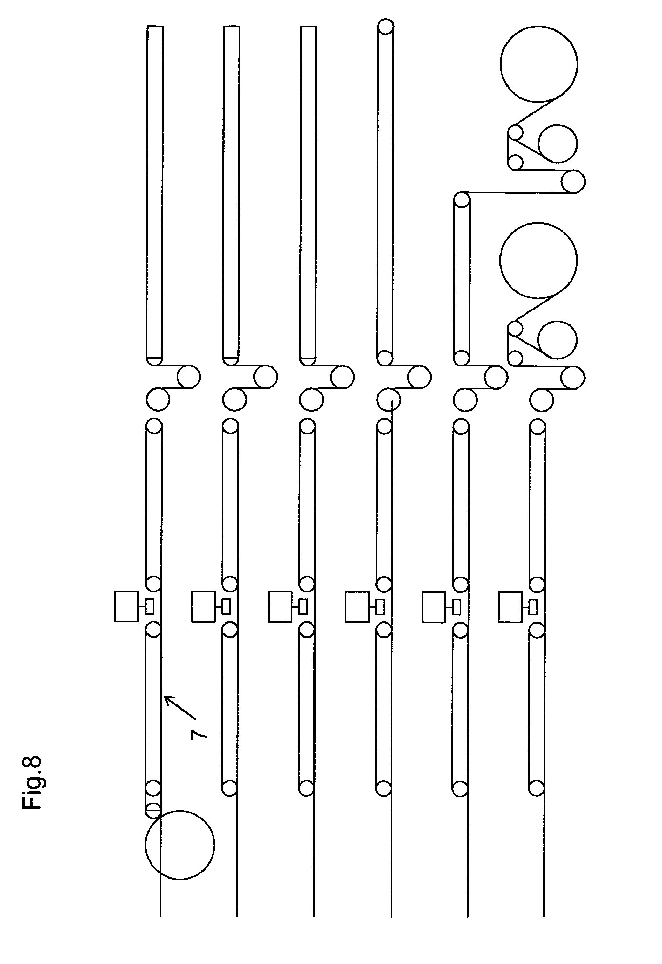

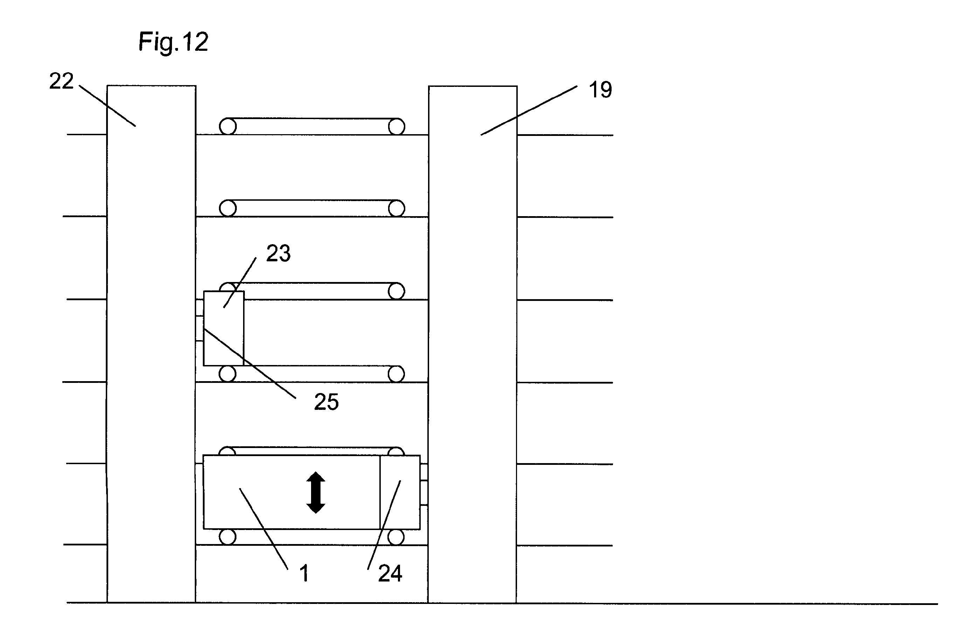

Figuren 1-12: mehrere Ausführungsbeispiele des erfindungsgemäßen Verfahrens.

Die Figur 1 zeigt ein erstes Ausführungsbeispiel des erfindungsgemäßen Verfahrens.
Die einzelnen Zuführvorrichtungen 2 bis 7 sind in vertikaler Richtung 20 übereinander angeordnet. Die Karkasstrommel 1 wird in vertikaler Richtung 20 hoch und runter verfahren jeweils in unterschiedliche Auflegepositionen vor die einzelnen Zuführeinrichtungen. Die erste Zuführeinrichtung ist für die Förderung der ersten Karkasseinlage zuständig. Jede Zuführrichtung 2 bis 7 ist für ein unterschiedliches Reifenaufbauteil zuständig. Die zweite Zuführeinrichtung ist für die Innenschicht, die dritte Zuführeinrichtung für die zweite Karkasseinlage, die vierte Zuführeinrichtung 5 für die Wulstverstärker, die fünfte Zuführeinrichtung 6 für ein Seitenwandbauteil und die sechste Zuführeinrichtung 7 für ein beliebiges sechstes Reifenaufbauteil zuständig. Jede Zuführeinrichtung 2 bis 7 besteht aus einem vorderen Teil 9 und einem hinteren Teil 10. Zwischen diesen beiden Teilen 9 und 10 ist jeweils eine Trennvorrichtung 8 angeordnet, mit der das entsprechende Reifenaufbauteil durchgetrennt wird. Jeder Zuführeinrichtung ist ebenfalls eine separate Bahnsteuerung 11 zugeordnet. Hinter der Bahnsteuerung 11 folgt ein Flachriemenförderer 12, der das entsprechende Reifenaufbauteil zu der Zuführeinrichtung hinfördert. Die einzelnen Zuführeinrichtungen 2 bis 7 sind in Form von Modulen mit einheitlichen Hauptmaßen ausgebildet. Insbesondere ist die Höhenabmessung 13 zwischen den einzelnen Modulen gleich groß. Bei diesem Ausführungsbeispiel beträgt die Höhenabmessung zwischen 30 und 50cm. Die dargestellten Längenabmessungen der einzelnen Zuführeinrichtungen 2 bis 7 sind ebenfalls gleich groß ausgeführt. Dadurch lassen sich die Zuführeinrichtungen auf einfache Weise modulartig ergänzen oder aber entfernen. Die Karkasstrommel 1 wird mit einem Trommellift in vertikaler Richtung 20 vor die einzelnen Zuführeinrichtungen verfahren. In jeder Auflegeposition wird jeweils ein Reifenaufbauteil auf die Karkasstrommel 1 aufgewickelt.

Die Fig. 2 zeigt das erfindungsgemäße Verfahren, wie in der Fig. 1 dargestellt ist. Zusätzlich zu der Fig. 1 sind in der Fig. 2 die einzelnen Rahmenbauteile 14 dargestellt, an denen die einzelnen Zuführeinrichtungen angordnet sind. Die Rahmenbauteile 14 sind ebenfalls modulartig aufgebaut.

Die Fig. 3 zeigt ein Ausführungsbeispiel des Verfahrens, bei dem die oberste Zuführeinrichtung weggelassen worden ist. Die Zuführeinrichtung, die in der Fig. 1 und in der Fig. 2 ein Seitenwandbauteil betrifft, ist bei der Anordnung in der Fig. 3 weggelassen worden. Bei diesem Ausführungsbeispiel wird eine Reifenkonstruktion ohne einem entsprechenden Seitenwandbauteil umgesetzt. Die Fig. 3 veranschaulicht, dass die entsprechende Anordnung auf einfache Weise mit entsprechenden Zuführeinrichtungen ergänzt werden kann, da die Zuführeinrichtungen modulartig aufgebaut sind.

Die Fig. 4 zeigt ein Ausführungsbeispiel, bei dem die Flachriemenförderer 12 geneigt angeordnet sind. Ansonsten entspricht die Anordnung in der Fig. 4 der Anordnung der Zuführeinrichtungen in den Figuren 1 und 2.

Die Fig. 5 zeigt das Ausführungsbeispiel der Fig. 1, wobei die Karkasstrommel 1 um eine Auflegepositon in vertikaler Richtung 20 nach oben verfahren worden ist. Die Karkasstrommel 1 befindet sich in der Auflegeposition vor der zweiten Zuführeinrichtung 3. Das Teil 15 der Zuführeinrichtung 3 wurde in horizontaler Richtung an die Unterseite 16 der Karkasstrommel 1 verfahren, um das entsprechende Reifenaufbauteil auf die Karkasstrommel zu übergeben. Mit der Zuführeinrichtung 3 wird die Innenschicht auf der Karkasstrommel 1 aufgewickelt.

Die Fig. 6 zeigt den Vorgang, bei dem die Karkasstrommel 1 in eine Auflegeposition vor die Zuführeinrichtung 2 bewegt wurde. Das Aufwickeln des Reifenaufbauteiles erfolgt analog zum Auflegevorgang in der Fig. 5.

Die Fig. 7 zeigt den Vorgang, bei dem Karkasstrommel 1 in eine weitere Auflegepositon vor die Zuführeinrichtung 4 verfahren wurde.

In dieser Auflegeposition wird die zweite Karkasseinlage auf die Karkasstrommel 1 aufgewickelt. Das Anlegen des Reifenaufbauteiles erfolgt wiederum an der Unterseite 16 der Karkasstrommel 1.

Die Fig. 7b zeigt den Vorgang, bei dem die Karkasstrommel 1 in eine weitere Auflegeposition vor die Zuführeinrichtung 5 verfahren wurde. Das Auflegen des Wulstverstärkers mit der Zuführeinrichtung 5 erfolgt an der Oberseite 17 der Karkasstrommel 1.

Die Fig. 8 zeigt den Vorgang, bei dem die Karkasstrommel 1 an die oberste Auflegeposition verfahren wurde. Die Zuführeinrichtung 7 kann ein beliebiges zusätzliches Reifenaufbauteil betreffen, z.B. einen beliebigen Gummistreifen.

Die Fig. 9 zeigt ein weiteres Ausführungsbeispiel, bei dem die Karkasstrommel 1 sich in einer Auflegeposition vor der Zuführeinrichtung 2 befindet. Das vordere Teil 18 der zweiten Zuführeinrichtung 3 ist geneigt worden, so dass das Reifenaufbauteil der Zuführeinrichtung 3 zunächst auf das vordere Teil der Zuführeinrichtung 2 gefördert wird. Anschließend werden beide Reifenaufbauteile, die erste Karkasseinlage und die Innenschicht, gleichzeitig auf der Karkasstrommel aufgewickelt.

Die Fig. 10 zeigt die Vorrichtung zur Durchführung des Verfahrens in einer Vorderansicht. Es wird eine Vorderansicht dargestellt, bei der man z.B. in der Fig. 1 von der linken zur rechten Blattseite blickt. Es ist im Wesentlichen der Trommellift 19 dargestellt, mit dem die Karkasstrommel 1 in vertikaler Richtung 20 auf- und abbewegt wird. Die Karkasstrommel wird dabei jeweils vor eine entsprechende Auflegeposition, vor eine der Zuführeinrichtungen 2 bis 7, positioniert. Die Karkasstrommel 1 verfügt über ein linkes freies Ende 21, über die die fertiggestellte Reifenkarkasse von der Karkasstrommel 1 abgenommen wird.

Die Fig. 11 zeigt ein weiteres Ausführungsbeispiel, bei dem gegenüberliegend zum Trommellift 19 ein entsprechender Reitstocklift 22 angeordnet ist. Der Reitstocklift 22 steht mit einer entsprechenden Aufnahme 25 mit der Karkasstrommel 1 in Verbindung. Die Karkasstrommel 1 wird auf der rechten Seite durch den Trommellift 19 und auf der linken Seite durch den Reitstocklift 22 gehalten und verfahren. Der linke Lagenumschlagsmechanismus 23 und der rechte Lagenumschlagsmechanismus 24 dienen dazu, den Lagenumschlag bei der Reifenkarkasse durchzuführen.

Die Fig. 12 zeigt das Ausführungsbeispiel in der Fig. 11, bei dem die Aufnahme 25 des Reitstockliftes in eine Warteposition nach oben verfahren worden ist. Anschließend kann die fertiggestellte Reifenkarkasse auf der freien Seite von der Karkasstrommel 1 entnommen werden.

### Bezugszeichenliste (ist Teil der Beschreibung)

- 1: Karkasstrommel
- 2: Erste Zuführeinrichtung für erste Karkasseinlage
- 3: Zweite Zuführeinrichtung für Innenschicht
- 4: Dritte Zuführeinrichtung für zweite Karkasseinlage
- 5: Vierte Zuführeinrichtung für Wulstverstärker
- 6: Fünfte Zuführeinrichtung für Seitenwandbauteil
- 7: Sechste Zuführeinrichtung für sechtes Reifenaufbauteil
- 8: Trennvorrichtung
- 9: Vorderes Teil der Zuführeinrichtung
- 10: Hinteres Teil der Zuführeinrichtung
- 11: Bahnsteuerung
- 12: Flachriemenförderer
- 13: Höhenabmessung eines Modules
- 14: Rahmenbauteil für Zuführeinrichtung
- 15: Teil der Zuführeinrichtung, die an die Unterseite der Karkasstrommel verfahren wird
- 16: Unterseite der Karkasstrommel
- 17: Oberseite der Karkasstrommel
- 18: Vorderes Teil der zweiten Zuführeinrichtung mit Neigung
- 19: Trommellift
- 20: Vertikale Richtung
- 21: Freie Seite der Karkasstrommel
- 22: Reitstocklift
- 23: Linker Lagenumschlagsmechanismus
- 24: rechter Lagenumschlagsmechanismus
- 25: Aufnahme des Reitstockliftes in Warteposition

## Patentansprüche

1. Verfahren zur Herstellung einer Reifenkarkasse für einen Fahrzeugreifen mit folgenden Schritten:
a) Positionierung einer Karkasstrommel (1) vor eine erste Zuführeinrichtung (2) zum Auflegen von einem ersten Reifenaufbauteil,
b) Aufwickeln des ersten Reifenaufbauteiles in einer ersten Auflegeposition auf der rotierenden Karkasstrommel (1),
c) Verfahren der Karkasstrommel in vertikaler Richtung (20) in mindestens eine weitere Auflegepositionen mit einer jeweils zugeordneten Zuführeinrichtung (2, 3, 4, 5, 6, 7) zum Auflegen von Reifenaufbauteilen,
wobei die Zuführeinrichtungen (2, 3, 4, 5, 6, 7) jeweils in vertikaler Richtung übereinander angeordnet sind, die Karkasstrommel (1) mit einem verfahrbaren Trommellift (19) in vertikaler Richtung (20) verfahren wird und an jeder Auflegeposition nacheinander einzelne Reifenaufbauteile übereinander aufgewickelt werden,
d) Fertigestellen der Reifenkarkasse auf der Karkasstrommel (1) und Abnahme der fertigen Reifenkarkasse von der Karkasstrommel (1)
e) Vervollständigung des Reifenrohlings mit einem konventionellen Herstellungsverfahren.

2. Verfahren nach Anspruch 1,
**dadurch gekennzeichnet, dass**
die einzelnen Zuführvorrichtungen (2, 3, 4, 5, 6, 7) im Wesentlichen horizontal und parallel übereinander angeordnet sind, wobei das Aufwickeln auf die Karkasstrommel (1) im Wesentlichen tangential zur Karkasstrommel (1) erfolgt.

3. Verfahren nach einem der vorhergehenden Ansprüche,
**dadurch gekennzeichnet, dass**
die einzelnen Zuführvorrichtungen (2, 3, 4, 5, 6, 7) in Form von Modulen mit einheitlichen Hauptmassen ausgebildet sind, wobei die Module übereinander angeordnet sind und modular ergänzt oder ausgetauscht werden können.

4. Verfahren nach einem der vorhergehenden Ansprüche,
**dadurch gekennzeichnet, dass**
die einzelnen Module eine im Wesentlichen konstante Höhen- (13) und konstante Längen-Abmessung aufweisen.

5. Verfahren nach einem der vorhergehenden Ansprüche,
**dadurch gekennzeichnet, dass**
die Übergabe des Reifenaufbauteiles an die Karkasstrommel (1) an der Unterseite (16) der Karkasstrommel (1) erfolgt.

6. Verfahren nach einem der vorhergehenden Ansprüche,
**dadurch gekennzeichnet, dass**
ein Teil der Zuführeinrichtung (15) bei der Übergabe des Reifenaufbauteiles an die Karkasstrommel (1) in tangentialer Richtung an die Karkasstrommel (1) verfahren wird und nach der Übergabe des Reifenaufbauteiles wieder in ihre Ausgangsposition zurückkehrt.

7. Verfahren nach einem der vorhergehenden Ansprüche,
**dadurch gekennzeichnet, dass**
über eine Neigungsverstellung einer Zuführvorrichtung (18) zwei Reifenaufbauteile gleichzeitig auf der Karkasstrommel (1) aufgewickelt werden.

8. Verfahren nach einem der vorhergehenden Ansprüche,
**dadurch gekennzeichnet, dass**
eine Innenschicht und eine erste Karkasseinlage als Reifenaufbauteile gleichzeitig auf der Karkasstrommel (1) aufgewickelt werden.

9. Verfahren nach einem der vorhergehenden Ansprüche,
**dadurch gekennzeichnet, dass**
hinter den Zuführeinrichtungen (2, 3, 4, 5, 6, 7) einzelne Flachriemenförderer (12) angeordnet sind, wobei die Flachriemenförderer (12) übereinander und im Wesentlichen horizontal angeordnet sind.

10. Verfahren nach einem der vorhergehenden Ansprüche,
**dadurch gekennzeichnet, dass**
der Trommellift (19) die Karkasstrommel (1) auf einer Seite der Karkasstrommel (1) hält und die Karkasstrommel (1) mit dem Trommellift (19) in vertikaler Richtung (20) vor die einzelnen Zuführeinrichtungen (2, 3, 4, 5, 6, 7) verfahren wird, wobei die Karkasstrommel (1) ausschließlich einseitig gelagert wird.

11. Verfahren nach einem der vorhergehenden Ansprüche,
**dadurch gekennzeichnet, dass**
die Karkasstrommel (1) auf der einer Seite von dem Trommellift (19) und auf der anderen Seite von einem Reitstocklift (22) gehalten wird.

12. Verfahren nach einem der vorhergehenden Ansprüche,
**dadurch gekennzeichnet, dass**
die Karkasstrommel (1) zwei Lagenumschlagsmechanismen (23, 24) zum Umschlagen der Karkasseinlagen in den Reifenwülsten umfasst.

13. Verfahren nach einem der vorhergehenden Ansprüche,
**dadurch gekennzeichnet, dass**
die Karkasstrommel (1) auf einer Seite zum Abholen der fertig gestellen Reifenkarkasse freigeben wird, wobei die Aufnahme (25) des Reitstockliftes (22) oder des Trommeliftes (19) in eine Warteposition verfahren wird.

14. Verfahren nach einem der vorhergehenden Ansprüche,
**dadurch gekennzeichnet, dass**
die Zuführvorrichtungen (2, 3, 4, 5, 6, 7) mit separaten Trennvorrichtungen (8) zum Durchtrennen der Reifenaufbauteile versehen sind.

15. Verfahren nach einem der vorhergehenden Ansprüche,
**dadurch gekennzeichnet, dass**
die Zuführvorrichtungen (2, 3, 4, 5, 6, 7) mit separaten Bahnsteuerungen (8) versehen sind.

## Claims

1. Process for producing a tyre carcass for a vehicle tyre with the following steps:
a) positioning a carcass drum (1) in front of a first feeding device (2) for placing a first tyre building part,
b) winding up the first tyre building part in a first placement position on the rotating carcass drum (1),
c) moving the carcass drum in a vertical direction (20) into at least one further placement position with a respectively assigned feeding device (2, 3, 4, 5, 6, 7) for the placing of tyre building parts, wherein the feeding devices (2, 3, 4, 5, 6, 7) are respectively arranged one over the other in the vertical direction, the carcass drum (1) is moved in the vertical direction (20) by a movable drum lift (19) and individual tyre building parts are successively wound up one over the other at each placement position,
d) finishing the tyre carcass on the carcass drum (1) and removing the finished tyre carcass from the carcass drum (1),
e) completing the tyre blank by a conventional production process.

2. Process according to Claim 1,
**characterized in that**
the individual feeding devices (2, 3, 4, 5, 6, 7) are arranged substantially horizontally and in parallel one above the other, wherein the winding up onto the carcass drum (1) takes place substantially tangentially in relation to the carcass drum (1).

3. Process according to one of the preceding claims,
**characterized in that**
the individual feeding devices (2, 3, 4, 5, 6, 7) take the form of modules with standard main dimensions, wherein the modules are arranged one above the other and can be added to or exchanged in a modular manner.

4. Process according to one of the preceding claims,
**characterized in that**
the individual modules have a substantially constant height dimension (13) and constant length dimension.

5. Process according to one of the preceding claims,
**characterized in that**
the transfer of the tyre building part to the carcass drum (1) takes place on the underside (16) of the carcass drum (1).

6. Process according to one of the preceding claims,
**characterized in that**
in the transfer of the tyre building part to the carcass drum (1), part of the feeding device (15) is moved up to the carcass drum (1) in a tangential direction and, after the transfer of the tyre building part, returns to its starting position.

7. Process according to one of the preceding claims,
**characterized in that**
two tyre building parts are wound up simultaneously on the carcass drum (1) by way of an adjustment of the inclination of a feeding device (18).

8. Process according to one of the preceding claims,
**characterized in that**
an inner layer and a first carcass inlay are wound up simultaneously on the carcass drum (1) as tyre building parts.

9. Process according to one of the preceding claims,
**characterized in that**
individual flat belt conveyors (12) are arranged behind the feeding devices (2, 3, 4, 5, 6, 7), wherein the flat belt conveyors (12) are arranged one above the other and substantially horizontally.

10. Process according to one of the preceding claims,
**characterized in that** the drum lift (19) holds the carcass drum (1) on one side of the carcass drum (1) and the carcass drum (1) is moved with the drum lift (19) in the vertical direction (20) in front of the individual feeding devices (2, 3, 4, 5, 6, 7), wherein the carcass drum (1) is mounted exclusively on one side.

11. Process according to one of the preceding claims,
**characterized in that**
the carcass drum (1) is held on one side by the drum lift (19) and on the other side by a tailstock lift (22).

12. Process according to one of the preceding claims,
**characterized in that**
the carcass drum (1) comprises two ply turn-up mechanisms (23, 24) for turning up the carcass inlays in the tyre beads.

13. Process according to one of the preceding claims,
**characterized in that**
the carcass drum (1) is released on one side for fetching the finished tyre carcass, wherein the holder (25) of the tailstock lift (22) or of the drum (19) is moved into a waiting position.

14. Process according to one of the preceding claims,
**characterized in that**
the feeding devices (2, 3, 4, 5, 6, 7) are provided with separate separating devices (8) for severing the tyre building parts.

15. Process according to one of the preceding claims,
**characterized in that**
the feeding devices (2, 3, 4, 5, 6, 7) are provided with separate path controllers (11).

## Revendications

1. Procédé de fabrication d'une carcasse de pneu pour un pneu de véhicule, comprenant les étapes suivantes:
a) positionnement d'un tambour de carcasse (1) devant un premier dispositif d'alimentation (2) pour la pose d'une première partie de montage de pneu,
b) enroulement de la première partie de montage de pneu dans une première position de pose sur le tambour de carcasse tournant (1),
c) déplacement du tambour de carcasse en direction verticale (20) dans au moins une autre position de pose avec un dispositif d'alimentation (2, 3, 4, 5, 6, 7) respectivement associé pour la pose de parties de montage de pneu,
dans lequel les dispositifs d'alimentation (2, 3, 4, 5, 6, 7) sont disposés respectivement l'un au-dessus de l'autre en direction verticale, on déplace le tambour de carcasse (1) avec un monte-tambour déplaçable (19) en direction verticale (20) et on enroule à chaque position de pose l'une après l'autre des parties individuelles de montage de pneu l'une au-dessus de l'autre,
d) achèvement de la carcasse de pneu sur le tambour de carcasse (1) et enlèvement de la carcasse de pneu terminée du tambour de carcasse (1),
e) finition de l'ébauche de pneu avec un procédé de fabrication conventionnel.

2. Procédé selon la revendication 1, **caractérisé en ce que** les dispositifs d'alimentation individuels (2, 3, 4, 5, 6, 7) sont disposés essentiellement à l'horizontale et parallèlement l'un au-dessus de l'autre, dans lequel l'enroulement sur le tambour de carcasse (1) se fait de façon essentiellement tangentielle au tambour de carcasse (1).

3. Procédé selon l'une quelconque des revendications précédentes, **caractérisé en ce que** les dispositifs d'alimentation individuels (2, 3, 4, 5, 6, 7) sont configurés sous forme de modules avec des masses principales unitaires, dans lequel les modules sont disposés l'un au-dessus de l'autre et peuvent être complétés ou échangés de façon modulaire.

4. Procédé selon l'une quelconque des revendications précédentes, **caractérisé en ce que** les modules individuels présentent une dimension de hauteur (13) et une dimension de longueur essentiellement constantes.

5. Procédé selon l'une quelconque des revendications précédentes, **caractérisé en ce que** le transfert de la partie de montage de pneu au tambour de carcasse (1) est effectué sur le côté inférieur (16) du tambour de carcasse (1).

6. Procédé selon l'une quelconque des revendications précédentes, **caractérisé en ce que** l'on déplace une partie du dispositif d'alimentation (15) lors du transfert de la partie de montage de pneu au tambour de carcasse (1) en direction tangentielle au tambour de carcasse (1) et on la ramène de nouveau dans sa position initiale après le transfert de la partie de montage de pneu.

7. Procédé selon l'une quelconque des revendications précédentes, **caractérisé en ce que** l'on enroule deux parties de montage de pneu en même temps sur le tambour de carcasse (1) par un déplacement oblique d'un dispositif d'alimentation (18).

8. Procédé selon l'une quelconque des revendications précédentes, **caractérisé en ce que** l'on enroule une couche intérieure et une première couche interne de carcasse en tant que parties de montage de pneu sur le tambour de carcasse (1).

9. Procédé selon l'une quelconque des revendications précédentes, **caractérisé en ce que** des convoyeurs à courroie plate individuels (12) sont disposés derrière les dispositifs d'alimentation (2, 3, 4, 5, 6, 7), dans lequel les convoyeurs à courroie plate (12) sont disposés l'un au-dessus de l'autre et essentiellement à l'horizontale.

10. Procédé selon l'une quelconque des revendications précédentes, **caractérisé en ce que** le monte-tambour (19) tient le tambour de carcasse (1) sur un côté du tambour de carcasse (1) et le tambour de carcasse (1) est déplacé avec le monte-tambour (19) en direction verticale (20) devant les dispositifs d'alimentation individuels (2, 3, 4, 5, 6, 7), dans lequel le tambour de carcasse (1) est supporté exclusivement d'un seul côté.

11. Procédé selon l'une quelconque des revendications précédentes, **caractérisé en ce que** le tambour de carcasse (1) est tenu sur un côté par le monte-tambour (19) et sur l'autre côté par un élévateur à poupée mobile (22).

12. Procédé selon l'une quelconque des revendications précédentes, **caractérisé en ce que** le tambour de carcasse (1) comprend deux mécanismes de rabattement de couche (23, 24) pour envelopper les couches internes de carcasse dans les talons du pneu.

13. Procédé selon l'une quelconque des revendications précédentes, **caractérisé en ce que** le tambour de carcasse (1) est libéré sur un côté pour l'enlèvement de la carcasse de pneu terminée, dans lequel le logement (25) de l'élévateur à poupée mobile (22) ou du monte-tambour (19) est déplacé dans une position d'attente.

14. Procédé selon l'une quelconque des revendications précédentes, **caractérisé en ce que** les dispositifs d'alimentation (2, 3, 4, 5, 6, 7) sont munis de dispositifs de coupe séparés (8) pour trancher les parties de montage de pneu.

15. Procédé selon l'une quelconque des revendications précédentes, **caractérisé en ce que** les dispositifs d'alimentation (2, 3, 4, 5, 6, 7) sont dotés de commandes de bande séparées (11).
